(19) Europäisches Patentamt
European Patent Office
Office européen des brevets

(11) **EP 4 653 129 A1**

(12) **EUROPEAN PATENT APPLICATION**
published in accordance with Art. 153(4) EPC

(43) Date of publication:
**26.11.2025 Bulletin 2025/48**

(21) Application number: **24759641.4**

(22) Date of filing: **19.02.2024**

(51) International Patent Classification (IPC):
**B23K 26/38** $^{(2014.01)}$ **B23K 26/082** $^{(2014.01)}$

(52) Cooperative Patent Classification (CPC):
**B23K 26/082; B23K 26/38**

(86) International application number:
**PCT/CN2024/077565**

(87) International publication number:
**WO 2024/174964 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.02.2023 CN 202310151781**

(71) Applicant: **Jinan Bodor CNC Machine Co., Ltd.**
**Jinan, Shandong 250000 (CN)**

(72) Inventors:
• **ZHANG, Qinming**
**Jinan, Shandong 250000 (CN)**
• **ZHANG, Chengshun**
**Jinan, Shandong 250000 (CN)**
• **CHEN, Chuanming**
**Jinan, Shandong 250000 (CN)**
• **SUN, Mingjie**
**Jinan, Shandong 250000 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **LASER SPOT DYNAMIC CONTROL METHOD AND LASER CUTTING SYSTEM**

(57) The present disclosure provides a dynamic control method for a laser spot and a laser cutting system. The method is applied to commissioning or laser cutting of a laser cutting head, where a laser spot performs reciprocating motion in an X direction and/or a Y direction in a focal plane, while performing high-frequency oscillation in a Z direction, to obtain kerf information at a specified mode. The above method solves the problem that a peak energy point of the laser beam in the prior art cannot be delivered to a target zone of the sheet desirably to cause a low energy utilization rate of the laser beam, low cutting efficiency, adhesion of the workpiece or reduced quality of the cut surface.

FIG. 3

EP 4 653 129 A1

# Description

## CROSS REFERENCE

This patent application claims the priority of Chinese Patent Application No. 202310151781.3, filed on February 22, 2023, and entitled "DYNAMIC CONTROL METHOD FOR LASER SPOT AND LASER CUTTING SYSTEM", the disclosure of which is incorporated into the present application herein by reference.

## TECHNICAL FIELD

The present disclosure relates to laser cutting technologies, and in particular to a dynamic control method for a laser spot and a laser cutting system.

## BACKGROUND TECHNOLOGY

At present, laser cutting is used to cut a metal sheet by irradiating the metal sheet with a focused high-power-density laser beam to cause the metal sheet to rapidly melt, vaporize, ablate, or reach an ignition point, and blowing away the molten material with a high-speed airflow coaxial with the laser beam. Compared with methods such as plasma cutting, flame cutting and wire electrical discharge machining (EDM), laser cutting has advantages of a small heat-affected zone (HAZ), a fast cutting speed, desirable cutting quality and the like, and has gained rapid and widespread application in cutting machining of the metal sheet.

During laser machining, energy of the spot and spatial distribution of the energy have a significant impact on a laser machining capability and a laser machining speed. For conventional laser machining technologies, heat of the laser beam is gradually attenuated when getting away from a focal point. Particularly in thick plate machining, the laser beam is static relative to a mechanical body of the cutting head, without generating a movement trajectory relative to the mechanical body of the cutting head. Hence, the peak energy point of the laser beam cannot be delivered to a target zone of the sheet desirably, causing a low energy utilization rate of the laser beam, low cutting efficiency, and adhesion of a workpiece or reduced quality of a cut surface.

## CONTENT OF THE INVENTION

### (I) Technical problem to be solved

In view of the above defects and shortages of the prior art, the present disclosure provides a dynamic control method for a laser spot and a laser cutting system, to realize cutting on a target zone with a laser beam in an optimal range of the laser spot to obtain a desired cut surface.

### (II) Technical solutions

To achieve the above objective, the present disclosure adopts the following technical solutions: According to a first aspect, an embodiment of the present disclosure provides a dynamic control method for a laser spot, applied to commissioning or laser cutting of a laser cutting head, where a laser spot performs reciprocating motion in an X direction and/or a Y direction in a focal plane, while performing high-frequency oscillation in a Z direction, to obtain kerf information at a specified mode.

Optionally, the dynamic control method includes:

using an optical component in an optical path of the laser cutting head to adjust beam information or a spot position of the optical path, ensuring that the laser spot in the focal plane performs the reciprocating motion in the X direction and/or the Y direction, while performing the high-frequency oscillation in the Z direction;
where, a position of the focal plane of the laser spot on a Z axis is associated with an attribute of a to-be-cut sheet.

Optionally, the laser spot in the Z direction has a high-frequency oscillation frequency of 20 Hz to 2 kHz; and during the laser cutting, the high-frequency oscillation frequency in the Z direction is fixed.

Optionally, a swing range in the X direction is $\pm 8$ mm;

a swing range in the Y direction is $\pm 8$ mm;
an oscillation range in the Z direction is $\pm 8$ mm; and
a positive direction of an X axis is a horizontal direction along a plane of a to-be-cut sheet, a positive direction of a Y axis is a vertical direction along the plane of the to-be-cut sheet, and a positive direction of a Z axis is a direction perpendicular to an XY plane and right above the plane of the to-be-cut sheet.

According to a second aspect, the present disclosure further provides a dynamic control method for a laser spot, where the dynamic control method is to adjust an optical path of a laser beam in a laser cutting head, ensuring that a laser spot irradiated onto a kerf zone performs three-dimensional (3D) dynamic motion, and the method comprises:

during commissioning or laser cutting of the laser cutting head, using an X-axis driving mechanism to ensure that the laser spot performs reciprocating motion in an X direction in a focal plane; and/or, using a Y-axis driving mechanism to ensure that the laser spot performs reciprocating motion in a Y direction in the focal plane; and
using a Z-axis adjustment mechanism to ensure that the laser spot performs high-frequency oscillation in a Z direction to obtain kerf information at a specified mode;

where, the X-axis driving mechanism, the Y-axis driving mechanism, and the Z-axis adjustment mechanism are electrically connected to a numerical control system of the laser cutting head.

Optionally, the Z-axis adjustment mechanism includes a piezoelectric ceramic mechanism/a voice coil motor mechanism/a motor cam mechanism configured to drive a collimating mirror component to vibrate along an optical axis; and

the numerical control system is configured to drive the collimating mirror component with the piezoelectric ceramic mechanism/the voice coil motor mechanism/the motor cam mechanism in response to a high-frequency oscillation instruction of a user in the Z direction to perform high-frequency oscillation along the optical axis.

Optionally, the X-axis driving mechanism includes a galvanometer motor deflection mechanism configured to drive a reflector component to rotate around a rotating shaft along an X axis;

the Y-axis driving mechanism includes a galvanometer motor deflection mechanism configured to drive a reflector component to rotate around a rotating shaft along a Y axis;

the rotating shaft of the reflector component driven by the X-axis driving mechanism and the rotating shaft of the reflector component driven by the Y-axis driving mechanism are disposed at an angle of 45° to 90°, and the reflector component corresponding to the X axis and the reflector component corresponding to the Y axis are independent of each other;

the numerical control system is configured to drive the reflector component of the X/Y axis with the galvanometer motor deflection mechanism in response to a high-frequency oscillation instruction of the user in the X/Y direction; and alternatively, the X-axis driving mechanism and the Y-axis driving mechanism are configured to drive the reflector component of the X axis or the reflector component of the Y axis with a linkage module; and the reflector component corresponding to the X axis and the reflector component corresponding to the Y axis are independent of each other.

Optionally, a rotating shaft of a reflector component driven by the X-axis driving mechanism and a rotating shaft of a reflector component driven by the Y-axis driving mechanism are perpendicular to each other.

Optionally, a 3D dynamic trajectory of the laser spot is as follows:

$$x=\tan(a)* L_1;$$

$$y=\tan(b)* L_2;$$

and

$$z=c*F,$$

where, x, y, and z represent 3D coordinates of each trajectory point in the 3D dynamic trajectory from a focal point 0;

a is an angle swung by a rotating shaft of a motor along the X axis in an XY plane relative to an original position; and b is an angle swung by a rotating shaft of a motor along the Y axis in a YZ plane relative to an original position;

c is a displacement parameter of a lens of the control system, and $L_1$ and $L_2$ each are a constant; and

F is a square of a magnification (MAG), and F=(a focal length of a focusing mirror/a focal length of a collimating mirror)$^2$.

Optionally, an oscillation frequency in the Z direction is 50 Hz to 1 kHz, the swing angle a along the X axis is in a range of $\pm 5°$, and the swing angle b along the Y axis is in a range of $\pm 5°$.

According to a third aspect, the present disclosure further provides a laser cutting system, including a laser cutting head and a numerical control system, where the numerical control system is configured to control, based on the dynamic control method for a laser spot in the first aspect, a laser spot in the laser cutting head to move.

According to a fourth aspect, the present disclosure further provides a computer program product, including a computer program, where when executed by a processor, the computer program implements steps of the dynamic control method for a laser spot in the first aspect.

(III) Beneficial effects

The method in the embodiment uses the reciprocating motion of the laser spot on the X/Y axis, and increases the high-frequency oscillation on the Z axis, such that the laser beam in an optimal range of the laser spot can cut the target zone to obtain the desired cut surface. The above method solves the problem that a peak energy point of the laser beam in the prior art cannot be delivered to a target zone of the sheet desirably to cause a low energy utilization rate of the laser beam, low cutting efficiency, adhesion of the workpiece or reduced quality of the cut surface.

**DESCRIPTION OF THE DRAWINGS**

FIG. 1 is a schematic diagram of comparison between a static spot and a 3D dynamic spot according to an embodiment of the present disclosure;

FIG. 2 is a schematic diagram of an optical path in a laser cutting head according to an embodiment of the present disclosure;

FIG. 3 is another schematic diagram of an optical path in a laser cutting head according to an embodiment of the present disclosure;

FIG. 4 is a schematic diagram of an XYZ triaxial linkage assembly according to an embodiment of the present disclosure;

FIG. 5 is a schematic diagram of X-Y axis independent swing units according to an embodiment of the present disclosure;

FIG. 6 is a first schematic diagram of an XY-axis linkage module according to an embodiment of the present disclosure;

FIG. 7 is a second schematic diagram of an XY-axis linkage module according to an embodiment of the present disclosure; and

FIG. 8 is a schematic diagram of a Z-axis runout assembly according to an embodiment of the present disclosure.

Reference numerals:

10: X-axis motor, 11: X-axis galvanometer, 12: Y-axis motor, 13: Y-axis galvanometer, 15: focusing mirror, 16: light entering point, 17: focal point, 18: reflector, and 19: collimating mirror;

20: fiber interface, 21: Z-axis runout assembly, 22: XY-axis planar scanning assembly, 23: transmission assembly, 24: gas path assembly, 25: Y-axis independent swing unit, 26: XY-axis fixing seat, 27: X-axis independent swing unit, 28: module water cooler, 29: module fixing seat, 30: linkage module, and 31: lens; and

32: voice coil motor, 33: inner core of voice coil motor, 34: lens component, and 35: collimating or focusing lens.

**SPECIFIC IMPLEMENTATIONS**

To facilitate a better understanding of the present disclosure, the present disclosure is described in detail below with reference to the accompanying drawings and specific implementations.

Embodiment 1

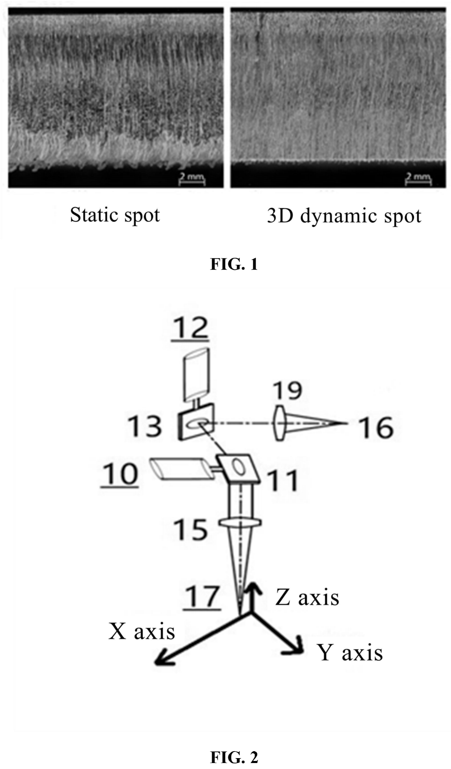

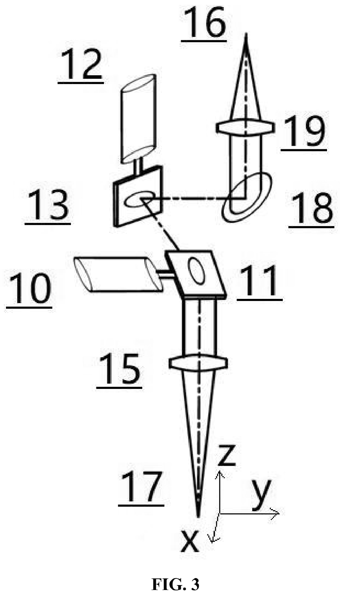

For ease of understanding, an optical path in a laser cutting head is described with reference to FIG. 2 and FIG. 3.

A laser beam emitted from a laser sequentially passes through collimating mirror 19, Y-axis galvanometer 13, X-axis galvanometer 11, and focusing mirror 15 in the laser cutting head, reaching a light outlet to form a 3D dynamic laser spot for a to-be-cut sheet. That is, the laser beam emitted by the laser based on light entering point 16 in the laser cutting head passes through the collimating mirror 19, reflector 18, the Y-axis galvanometer 13, the X-axis galvanometer 11, and the focusing mirror 15, forming focal point 17 in a zone of the to-be-cut sheet. The focal point can perform 3D dynamic change to quickly cut the sheet.

Actually, the collimating mirror 19, the X-axis galvanometer 11, the Y-axis galvanometer 13, and the focusing mirror 15 are electrically connected and driven by respective driving assemblies (such as X-axis motor 10 and Y-axis motor 12). These driving assemblies are electrically connected to a numerical control system of the laser cutting head. Hence, by adjusting parameters of a control interface in the numerical control system or sending an instruction, one or more of the collimating mirror 19, the X-axis galvanometer 11, the Y-axis galvanometer 13, and the focusing mirror 15 can be adjusted, realizing adjustment on a 3D trajectory of the laser spot. The collimating mirror 19 is configured to shape a beam diffused from the light entering point into a parallel beam. The beam is irradiated onto the Y-axis galvanometer, and reflected by the Y-axis galvanometer to the X-axis galvanometer. Reflected by the X-axis galvanometer to the focusing mirror, focused by the focusing mirror and transmitted through a lower protective mirror, the beam is output by a nozzle to form a cutting laser beam.

In FIG. 2, the X-axis motor 10, namely galvanometer motor X, is electrically connected to the X-axis galvanometer 11 through a motor shaft, and configured to realize reciprocating motion of the laser spot in an X direction. The Y-axis motor 12, namely galvanometer motor Y, is electrically connected to the Y-axis galvanometer 13 through a motor shaft, and configured to realize reciprocating motion of the laser spot in a Y direction. Adjusting the collimating mirror 19 or the focusing mirror 15 realizes high-frequency oscillation of the laser spot in a Z direction.

The galvanometer motor X and other auxiliary elements can form an X-axis driving mechanism, which is configured to drive a reflector component such as the galvanometer X to rotate around the motor shaft.

The galvanometer motor Y and other auxiliary elements can form a Y-axis driving mechanism, which is configured to drive a reflector component such as the galvanometer Y to rotate around the motor shaft.

It is to be noted that the motor shaft of the galvanometer motor X and the motor shaft of the galvanometer motor Y are perpendicular to each other. The reflector component corresponding to an X axis and the reflector component (such as the galvanometer) corresponding to a Y axis are independent from each other. Actually, a driving mechanism for each of the X-axis galvanometer and the Y-axis galvanometer may be a galvanometer motor deflection mechanism, which is not limited in the embodiment, and is selected and configured according to an actual need. Through the driving mechanism, the laser spot performs planar motion in a focal plane, such that laser energy is distributed more uniformly in a to-be-cut material to generate an optimized and desired kerf.

In addition, a driving mechanism of a Z axis may be a piezoelectric ceramic mechanism/a voice coil motor mechanism/a motor cam mechanism for driving a collimating mirror component. The driving mechanism can enable the laser spot to perform high-frequency oscillation along an optical axis in the Z direction. For example, the driving mechanism enables the collimating mirror, the focusing mirror and the like in the optical path to change with a position of the laser beam, thereby controlling the focal point to vibrate up and down near a surface of the to-be-cut sheet, and ensuring that the laser energy is distributed more uniformly in the material.

In view of this, an embodiment provides a dynamic control method for a laser spot. The method is applied to commissioning or laser cutting of a laser cutting head. A laser spot performs reciprocating motion in an X direction and/or a Y direction in a focal plane, while performing high-frequency oscillation in a Z direction, to obtain kerf information at a specified mode of a cut piece.

For example, the kerf information at the specified mode of the cut piece may include kerf information in a preset duration. Namely, a cut surface of a kerf meets a detection index, or, smoothness of the cut surface of the kerf meets a requirement, or, a cutting speed of the kerf meets a preset threshold, etc.

Based on the above description on assemblies in the optical path of the laser beam in FIG. 2 and FIG. 3, in actual machining, an optical component in an optical path of the laser cutting head may be used to adjust beam information or a spot position of the optical path, forming the laser spot that performs the reciprocating motion in the X direction and/or the Y direction in the focal plane, while performing the high-frequency oscillation in the Z direction.

A position of the focal plane of the laser spot on a Z axis is associated with an attribute of a to-be-cut sheet.

In the embodiment, the laser spot in the Z direction has a high-frequency oscillation frequency of 20 Hz to 2 kHz. During laser cutting, the high-frequency oscillation frequency in the Z direction is fixed.

As shown in FIG. 2, in the embodiment, a positive direction of an X axis is a horizontal direction along a plane of a to-be-cut sheet, a positive direction of a Y axis is a vertical direction along the plane of the to-be-cut sheet, and a positive direction of a Z-axis is a direction perpendicular to an XY plane and right above the plane of the to-be-cut sheet.

A swing range in the X direction is ±8 mm, a swing range in the Y direction is ±8 mm, and a swing range in the Z direction is ±8 mm.

The method in the embodiment uses the reciprocating motion of the laser spot on the X/Y-axis, and increases the high-frequency oscillation on the Z axis, such that the laser beam in an optimal range of the laser spot can cut the target zone to obtain the desired cut surface. The above method solves the problem that a peak energy point of the laser beam in the prior art cannot be delivered to a target zone of the sheet desirably to cause a low energy utilization rate of the laser beam, low cutting efficiency, adhesion of the workpiece or reduced quality of the cut surface.

According to the prior art, the laser spot can only perform reciprocating motion in a two-dimensional (2D) focal plane, such as X-axis reciprocating motion or Y-axis reciprocating motion, and cannot realize a 3D dynamic trajectory. Hence, the optical path of the laser beam in the laser cutting head is adjusted in the embodiment. Specifically, during the commissioning or the laser cutting of the laser cutting head, an X-axis driving mechanism is used to ensure that the laser spot performs the reciprocating motion in the X direction in the focal plane (for example, the X-axis driving mechanism drives the X-axis galvanometer to realize the motion of the laser spot). And/or, a Y-axis driving mechanism is used to ensure that the laser spot performs the reciprocating motion in the Y direction in the focal plane (for example, the Y-axis driving mechanism drives the Y-axis galvanometer to realize the motion of the laser spot). A Z-axis adjustment mechanism is used to ensure that the laser spot performs the high-frequency oscillation in the Z direction to obtain the kerf information at the specified mode. The laser spot irradiated onto the kerf zone performs the 3D dynamic motion.

The X-axis driving mechanism, the Y-axis driving mechanism, and the Z-axis adjustment mechanism in the embodiment are electrically connected to a numerical control system of the laser cutting head. The X-axis driving mechanism is configured to drive a reflector component to cause high-frequency oscillation of the focal spot in the X direction, namely cause a reciprocating swing angle of the X-axis reflector of the optical path around the motor shaft along the X axis. The Y-axis driving mechanism is configured to drive a reflector component of a Y axis to cause high-frequency oscillation of the focal spot in the Y direction, namely cause a reciprocating swing angle of a Y-axis reflector of the optical path around the motor shaft along the Y axis. Consequently, the laser spot performs the reciprocating motion in the focal plane. Typically, the reciprocating swing angle of each of the X-axis reflector and the Y-axis reflector is within ±5°.

The Z-axis adjustment mechanism includes a piezoelectric ceramic mechanism/a voice coil motor mechanism/a motor cam mechanism configured to drive a collimating mirror component to vibrate along an optical axis.

The numerical control system is configured to drive the collimating mirror component with the piezoelectric ceramic mechanism/the voice coil motor mechanism/the motor cam mechanism in response to a high-frequency oscillation instruction of a user in the Z direction to perform high-frequency oscillation along the optical axis.

The X-axis driving mechanism includes a galvanometer motor deflection mechanism configured to drive a reflector component to rotate around a rotating shaft along an X axis. The rotating shaft of the X axis is a connecting shaft between the X-axis motor and the X-axis galvanometer.

The Y-axis driving mechanism includes a galvanometer motor deflection mechanism configured to drive a reflector component to rotate around a rotating shaft along a Y axis. The rotating shaft of the Y axis is a connecting shaft between the Y-axis motor and the Y-axis galvanometer.

The rotating shaft of the reflector component driven by the X-axis driving mechanism and the rotating shaft of the reflector component driven by the Y-axis driving mechanism are disposed at an angle of 45° to 90°, and the reflector component corresponding to the X axis and the reflector component corresponding to the Y axis are independent of each other. Preferably, the rotating shaft of the reflector component driven by the X-axis driving mechanism and the rotating shaft of the reflector component driven by the Y-axis driving mechanism are perpendicular to each other, and the reflector component corresponding to the X axis and the reflector component corresponding to the Y axis are independent of each other.

The numerical control system is configured to drive the reflector component of the X/Y axis with the galvanometer motor deflection mechanism in response to a high-frequency oscillation instruction of the user in the X/Y direction to perform the high-frequency oscillation along the X/Y direction.

A 3D dynamic trajectory of the laser spot may be as follows:

$$x=\tan(a)* L_1;$$

$$y=\tan(b)* L_2;$$

and

$$z=c*F,$$

where, x, y, and z represent 3D coordinates of each trajectory point in the 3D dynamic trajectory from a focal point 0; a is an angle swung by a rotating shaft of a motor along the X axis in an XY plane relative to an original position, b is an angle swung by a rotating shaft of a motor along the Y axis in a YZ plane relative to an original position, c is a displacement parameter of a lens of the control system, and $L_1$ and $L_2$ each are a constant. The $L_1$ and the $L_2$ are related to a structure of the optical path of the laser head. For different structures of the laser head, the $L_1$ and the $L_2$ have different values.

F=a square of a magnification (MAG)=(a focal length of a focusing mirror/a focal length of a collimating mirror)$^2$. An oscillation frequency in the Z direction is 50 Hz to 1 kHz. The swing angle a along the X axis is in a range of ±5°, and the swing angle b along the Y axis is in a range of ±5°.

According to actual examples, the laser beam emitted from the laser is diffused through the collimating mirror. The optical path of the laser beam is changed with the reflector or the galvanometer. The beam is focused by the focusing mirror. A focused laser beam is irradiated onto the to-be-machined sheet. The laser beam is controlled in the cut sheet through the numerical control system. The laser beam is moved according to a trajectory set by a program, thereby completing cutting. During the cutting, the focal spot is controlled to form the 3D dynamic trajectory in a laser irradiation direction.

In the embodiment, materials that can be cut by the laser mainly include a stainless steel plate, a copper plate, an aluminum plate, and a carbon steel plate. Typically, the cut piece includes a thin plate, a medium plate, and a thick plate. In the embodiment, the thin plate has a thickness of 1-6 mm, the medium plate has a thickness of 7-15 mm, and the thick plate has a thickness of 16 mm or more.

When a stainless steel medium plate or a stainless steel thick plate is cut, the trajectory of the spot has a diameter of 50-800 μm, the spot has a swing frequency of 50-500 Hz along the X/Y axis, a negative focal point is used, the collimating mirror has a vibration amplitude of 0.2-2 mm, the spot has a vibration frequency of 50-400 HZ along the Z axis, and when a cutting auxiliary gas is nitrogen or air, a pressure is 5-25 bar. Compared with laser cutting that has same parameters and an unadjustable spot, the method can improve the cutting speed by 40-80%.

When a carton steel medium plate and a stainless steel thick plate are cut, the trajectory of the spot has a diameter of 20-400 μm, the spot has a swing frequency of 100-300 Hz along the X/Y axis, a positive focal point is used, the collimating mirror has a vibration amplitude of 0.05-1.5mm, the spot has a vibration frequency of 50-400 HZ along the Z axis, and when a cutting auxiliary gas is oxygen, a pressure is 0.4-2.8 bar. Compared with laser cutting that has same parameters and an unadjustable spot, the method in the embodiment can improve the cutting speed by 10-45%.

When a copper or aluminum medium plate or a copper or aluminum thick plate is cut, the trajectory of the spot has a diameter of 80-600 μm, the spot has a swing frequency of 50-500 Hz along the X/Y axis, a negative focal point is used, the collimating mirror has a vibration amplitude of 0.2-2 mm, the spot has a vibration frequency of 50-400 HZ along the Z axis, and when a cutting auxiliary gas is nitrogen or air, a pressure is 5-25 bar. Compared with laser cutting that has same parameters and an unadjustable spot, the method can improve the cutting speed by 20-300%. As shown in FIG. 1, during the cutting, in the X direction and the Y direction, the frequency is 500, and the amplitude is 600 μm. In the Z

direction, the frequency is 200, and the amplitude is 2 mm. When the 15-mm stainless steel sheet is cut, the cutting speed is 1.4 m/min, the bottom dross is 0.4 mm, and the surface roughness is 0.03. When a static spot is used, the speed is 0.8 m/min, the bottom dross is 1.2 mm, and the surface roughness is 0.06. Through comparison on various parameters, the method in the embodiment significantly outperforms the conventional method using the static spot, as shown in FIG. 1.

Embodiment 2

The existing conventional laser cutting head typically uses a point-like spot. The point-like spot is realized as follows: Through a collimating mirror, a beam becomes a parallel beam. The parallel beam is focused to form a focused beam. The focused spot is point-like on the sheet. The point-like spot has a narrow cutting slit when the sheet is cut, such that the gas hardly passes through the small slit to blow away molten slag, causing serious bottom dross adhesion of a cut surface of the thick plate. Scanning the spot is to rotate the point-like spot in different patterns on a plane, and is realized by respectively adding high-frequency vibration structures in the X direction and the Y direction on the basis of the structure of the point-like point, such that the cutting slit is widened. With a gas flow passing through the wide cutting slit, the bottom dross amount on the cut surface of the thick plate can be reduced, the speed is improved by 30%, but the thickness is not increased obviously. Hence, to improve the speed and increase the cutting thickness at a same power, a 3D spot in the embodiment is proposed.

A laser cutting system in the embodiment of the present disclosure includes a laser cutting head and a numerical control system. The numerical control system is configured to control, based on the dynamic control method for a laser spot in the first aspect, a laser spot in the laser cutting head to move.

It is to be noted that the numerical control system may be a computer program for controlling the laser cutting head in a laser cutting system, thereby controlling motion of the laser spot in the laser cutting head.

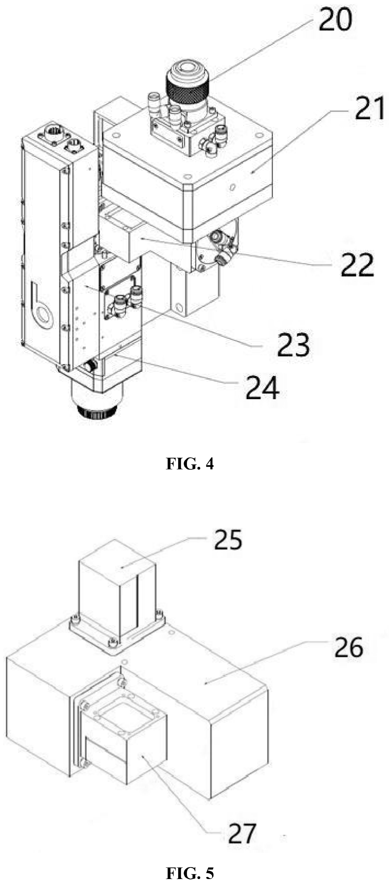

The following describes an X-axis driving mechanism, a Y-axis driving mechanism, a Z-axis adjustment mechanism and the like in the laser cutting system of the embodiment in detail with reference to FIG. 4 to FIG. 8.

As shown in FIG. 4, the cutting head mainly includes fiber interface 20, Z-axis runout assembly (namely a Z-axis adjustment mechanism) 21, XY-axis planar scanning assembly 22, a collimating assembly (not shown in the figure), a focusing assembly (not shown in the figure), a centering assembly (not shown in the figure), transmission assembly 23, gas path assembly 24, a nozzle (not shown in the figure), etc. To achieve 3D dynamic change of the laser spot, the Z-axis runout assembly and the XY-axis planar scanning assembly serve as core assemblies. According to an instruction of the numerical control system, an X axis, a Y axis, and a Z axis are used to adjust a frequency and an amplitude of each of the Z-axis runout assembly 21 and the XY-axis planar scanning assembly 22, thus realizing different 3D spots, and realizing 3D motion of the laser spot on the surface of the sheet or inside the sheet.

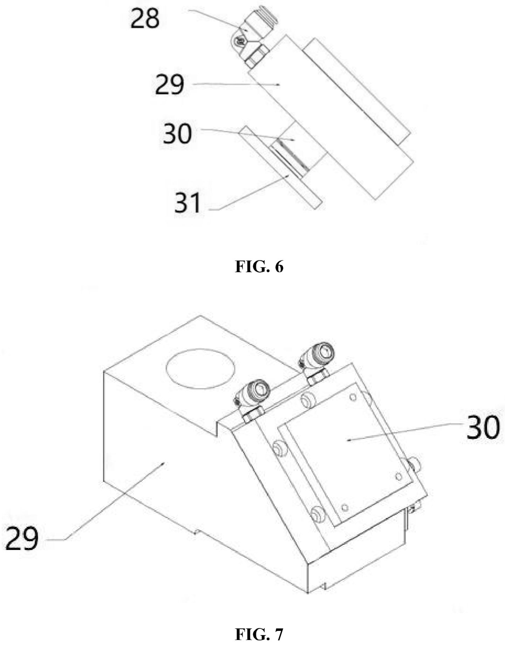

The XY-axis planar scanning assembly 22 shown in FIG. 4 has two structural forms. One structural form is shown in FIG. 5 in which swing of each of the X axis and the Y axis is controlled independently. The other structural form is shown in FIG. 6 in which linkage for the X-axis and the Y-axis is realized through a single component (such as a linkage module).

As shown in FIG. 5, X-axis independent swing unit 27 mainly includes a high-frequency cyclic vibration motor, a reflector, a lens fixing seat, a motor clamping fixed member, a motor adjustment device, etc. Likewise, Y-axis independent swing unit 25 mainly includes a high-frequency cyclic vibration motor, a reflector, a lens fixing seat, a motor clamping fixed member, a motor adjustment device, etc.

The lens fixing seat (not shown in the figure) may be provided at a shaft end of the high-frequency cyclic vibration motor in the independent swing unit shown in FIG. 5. The lens fixing seat may be connected by at least one bolt. The lens fixing seat is fixed on the high-frequency cyclic vibration motor. The structure of the lens fixing seat may be two independent parts that enclose a motor shaft and then are fixed by two bolts, and may also be an independent part with a circular hole. The structure is fixed at the motor shaft end after the part is screwed by a single bolt.

Based on the structure shown in FIG. 5, when a lens through which the beam passes is fixed on the lens fixing seat, a notch as wide as the lens is formed at a lens fixing end of the lens fixing seat. The lens may be adhered to the lens fixing seat by direct potting. Certainly, for two edges of the notch of the fixing seat, one edge is provided with a through hole, and the other edge is provided with a threaded hole. After passing through the through hole in the first edge, a bolt is threadedly fixed with the other edge through the lens. In addition, the motor clamping fixed member may be configured to clamp a high-frequency cyclic vibration motor combined set to form an independent swing unit. The X-axis independent swing unit and the Y-axis independent swing unit are fixed on the XY-axis fixing seat 26, such that the X axis and the Y axis independently control beams in different directions to swing. The lens herein is a galvanometer lens.

In other embodiments, the lens fixing seat may also not be provided. An output shaft of an X-axis motor is provided with an X-axis galvanometer through a shaft coupling. An output shaft of a Y-axis motor is provided with a Y-axis galvanometer through a shaft coupling. A limiting component is disposed in front or back of a reflecting surface of each of the X-axis galvanometer and the Y-axis galvanometer. For example, a distance between the limiting component and the corresponding galvanometer is p that is about 0.4-12 mm. The X/Y-axis galvanometer is rotated to two specified positions (the positions are used to prevent the galvanometer from rotating to cause deviation of the laser beam from a preset optical path zone). By this time, the specified positions may come in contact with the limiting components respectively, namely the specified positions are extreme positions at two ends to which the galvanometer is rotated. In the embodiment, the output shaft of the X-axis motor and the output shaft of the Y-axis motor are perpendicular to each other. The output shaft of the X-axis motor may be provided horizontally or vertically, or is provided according to a specified angle.

As shown in FIG. 6, the X-axis and Y-axis linkage assembly mainly includes lens 31, linkage module 30, module fixing seat 29, module water cooler 28, etc.

The linkage module 30 in FIG. 6 may be a component capable of controlling an end surface deflecting angle and an end surface deflecting frequency, such as a piezoelectric deflection mechanism. By controlling a frequency and an amplitude of the component through an independent control unit, regular high-frequency vibration for an end surface of the linkage module 30 is realized. The lens 31 in FIG. 6 is a reflector. A non-reflective surface is fixed to a regular vibration side of the linkage module 30 in a manner not limited to adhesion, bolt fixation and the like. The module fixing seat 29 may be configured to fix the lens 31 and the linkage module 30 together. The module fixing seat 29 is configured to fix the other end of the linkage module 30 using cooperation between a stop and a bolt. The stop is configured to ensure that the linkage module 30 and the module fixing seat 29 are fixed directionally together for locating, and then are fixed by a bolt.

The linkage module 30 produces a large amount of heat for high-frequency vibration in use, so water coolers are disposed around the linkage module 30. Since a circumference of the linkage module 30 heats, water channels are disposed at a periphery of the linkage module 30. Cooling water is configured to cool a mechanical part, and the heat is absorbed by a wall.

The above mounted assemblies are disposed on an independent mounting seat between the collimating mirror and the focusing mirror. When the laser beam passes through the assemblies, the linkage module 30 causes the high-frequency vibration to realize swing of the spot in the X direction and the Y direction.

The Z-axis runout assembly is configured to move the spot in the Z direction. The runout may be realized by Z-axis movement of the collimating mirror, and may also be realized by Z-axis movement of the focusing mirror. The two mirrors are used alternatively.

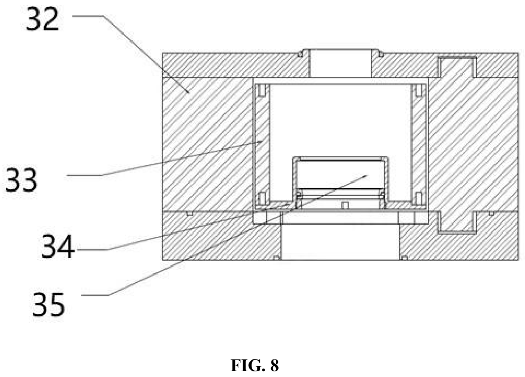

As shown in FIG. 8, the Z-axis runout assembly mainly includes voice coil motor 32, lens component 34, and collimating or focusing lens 35. Actually, either the collimating lens or the focusing lens is moved, and there is no need to move both the collimating lens and the focusing lens.

The collimating or focusing lens 35 is disposed in the lens component 34. The lens component 34 in place is disposed in inner core 33 of the voice coil motor. The inner core of the voice coil motor is a hollow structure, and is provided with a stop. The lens component 34 and the voice coil motor 32 are fitted for mounting.

The voice coil motor in place is fixed at the collimating mirror or the focusing mirror of the original ordinary cutting head. Mounting plates at two ends of the voice coil motor 32 each are provided with a through hole or a threaded hole, and fixed by a bolt.

Typically, the voice coil motor may be disposed on a motor frame. The motor frame includes a fixed member and a movable member. The movable motor is located at one side of the fixed member. The fixed member is connected to the movable member through a bolt. The voice coil motor is disposed between the fixed member and the movable member and tightly fixed by the fixed member and the movable member. Actually, a motor cooling component is further disposed in the fixed member. A tail shield may further be disposed at a tail of the motor.

After the above assemblies are disposed in place, vertical movement in the Z direction can be realized.

In other embodiments, the focusing lens may further be provided with a focusing lens housing. The focusing lens housing is a housing provided with a through hole vertically. The focusing lens housing is fixed on a lifting mechanism. In the lifting mechanism, the focusing lens may move up and down along an optical path. the lifting mechanism may be a screw rod component. In other implementations, the collimating lens may also move along the optical path through a moving mechanism. Typically, the focusing mirror and the collimating mirror may have a zoom ratio of 2-2.5.

The above for realizing triaxial linkage of the spot on the X axis, the Y axis, and the Z axis is not limited to one combined form. The triaxial linkage may be realized by providing the collimating mirror with the X-axis independent swing unit, the Y-axis independent swing unit and the Z-axis runout assembly, and may also be realized by providing the focusing mirror with the X-axis independent swing unit, the Y-axis independent swing unit and the Z-axis runout assembly. It may further be realized by fitting the X-axis independent swing unit and the Y-axis linkage module to the collimating mirror of the Z-axis runout assembly or the focusing mirror of the Z-axis runout assembly.

Actually, a nozzle and a cutting gas path are disposed under the focusing lens. During laser cutting, a distance between a spray-head of the nozzle and the to-be-cut sheet may be 0.1-3 mm. The laser beam passing through the focusing lens is emitted from the spray-head of the nozzle. After passing through the nozzle, cutting auxiliary gas of the cutting gas path becomes high-speed gas. During cutting of the gas, cut molten slag is blown away to protect the to-be-cut sheet.

According to another aspect in the embodiment of the present disclosure, the solution in the embodiment is described. The laser cutting head in the embodiment includes a beam shaper, an X-axis and Y-axis independent galvanometer assembly, a focusing assembly, and a nozzle that are provided sequentially along the optical path.

Typically, the beam shaper includes a beam filter component and a collimating mirror component. On the optical path, the beam filter component is located in front of the collimating mirror component. An upper protective mirror is disposed on the beam shaper. The upper protective mirror is located between the beam filter component and the collimating mirror component.

A beam passing hole is formed in a middle of the beam filter component. A tapered beam absorption surface is provided above the beam passing hole. A taper angle from a light exiting point of the laser to the beam passing hole is greater than or equal to a beam-divergence angle of the laser. A tapered beam absorption surface may also be provided under the beam passing hole as required. Therefore, a middle high-energy beam can be used to improve laser cutting accuracy.

The collimating mirror component is correspondingly provided with the Z-axis runout assembly. The Z-axis runout assembly is configured to control vertical movement of the collimating mirror component, thereby realizing Z-axis oscillation. Typically, the collimating mirror component includes a collimating mirror housing and a collimating mirror. The collimating mirror is fixed in the collimating mirror housing. The housing is externally connected to the voice coil motor 32 and a coaxial control assembly, and is configured to ensure that the laser beam passes through a center of the nozzle symmetrically and realize vertical vibration of the Z axis, thereby ensuring the cutting accuracy and the same cutting effect of the cut surface.

The actual laser beam is reflected twice by the X-axis galvanometer and the Y-axis galvanometer, and may be controlled by a program. By controlling swing of the two galvanometers, a spot of the output laser beam can move along a preset trajectory in the XY plane. The preset trajectory may include a horseshoe shape, a transverse "8" shape, a circular shape, etc.

During specific cutting, the cutting operation is as follows:

The to-be-cut sheet is placed onto a cutting operation table. The shape of the trajectory of the spot is selected on the numerical control system, and a radius and swing frequency of the trajectory are set. A cutting height, a cutting focal point, a cutting speed, and a pressure parameter of a cutting gas are set.

The sheet is calibrated. The position of the collimating mirror is adjusted by adjusting a coaxial adjusting member to align the input beam. By adjusting a deflection angle of the X-axis galvanometer and a deflection angle of the Y-axis galvanometer, a coaxiality between the output beam and the nozzle is determined. Height calibration is performed to ensure that the laser head operates according to the preset trajectory, and determine whether the to-be-cut pattern falls in the sheet completely. Upon completion of the calibration, cutting is performed according to preset spot parameters and preset cutting parameters.

By controlling the X-axis galvanometer, the Y-axis galvanometer, and the Z-axis runout assembly, the shape of the trajectory of the spot can be changed. The spot performs 3D high-speed oscillation, greatly improving the thickness and cutting speed of the cut sheet. The laser with the existing power can achieve the cutting effect and the cutting speed at a higher power, reducing the production and procurement cost. A heat dissipation function is achieved, ensuring long-time operation of the laser head. The protective mirror prevents damage and pollution to the inside of the laser head. The modular design is used overall, and the trajectory control assembly has multiple use forms, facilitating assembly and use. With the cutting process provided by the present disclosure, the quicker cutting speed can be achieved, and under the same power, the cut sheet has a larger thickness.

The present disclosure provides a storage medium. The storage medium stores a computer program. When is executed by a processor, the computer program implements the method in the embodiment.

The present disclosure further provides a computer program product. When the computer program product runs on a computer, the computer executes the method in the method embodiment.

It should be noted that, in the claims, any reference signs placed between parentheses shall not be construed as limiting the claim. The word "include" does not exclude the presence of components or steps not listed in the claims. The word "a/an" or "one" preceding an element does not exclude the existence of multiple such components. The present disclosure can be implemented with the assistance of hardware including several different components and the assistance of a properly programmed computer. In the claims where several apparatuses are listed, several of the apparatuses may be embodied by the same hardware item. The words first, second, third, etc. are used for convenience of expression only and do not imply any order. These words can be understood as part of the component name.

In addition, it should be noted that in the description of this specification, the description with reference to the terms such as "one embodiment", "some embodiments", "embodiment", "example", "specific example" or "some examples" means that specific features, structures, materials or characteristics described in connection with the embodiment or example are included in at least one embodiment or example of the present disclosure. In this specification, the schematic expression of the above terms is not necessarily directed to the same embodiment or example. Moreover, the specific features, structures, materials, or characteristics described may be combined in a suitable manner in any one or more embodiments or examples. In addition, those skilled in the art may combine different embodiments or examples described in this specification and characteristics of the different embodiments or examples without mutual contradiction.

Although preferred embodiments of the present disclosure have been described, those skilled in the art can make additional alterations and modifications to these embodiments once they learn the basic inventive concept. Therefore, the appended claims are intended to be interpreted as including the preferred embodiments and all alterations and modifications falling in the scope of the present disclosure.

Obviously, those skilled in the art can make various alterations and modifications to the present disclosure without departing from the spirit and scope of the present disclosure. The present disclosure is intended to cover these modifications and variations provided that they fall in the scope of protection defined by the following claims and their equivalent technologies.

**Claims**

1. A dynamic control method for a laser spot, applied to commissioning or laser cutting of a laser cutting head, wherein a laser spot performs reciprocating motion in an X direction and/or a Y direction in a focal plane, while performing high-frequency oscillation in a Z direction, to obtain kerf information at a specified mode.

2. The method according to claim 1, wherein the dynamic control method comprises:

   using an optical component in an optical path of the laser cutting head to adjust beam information or a spot position of the optical path, ensuring that the laser spot in the focal plane performs the reciprocating motion in the X direction and/or the Y direction, while performing the high-frequency oscillation in the Z direction;
   wherein, a position of the focal plane of the laser spot on a Z axis is associated with an attribute of a to-be-cut sheet.

3. The method according to claim 1, wherein the laser spot in the Z direction has a high-frequency oscillation frequency of 20 Hz to 2 kHz; and during the laser cutting, the high-frequency oscillation frequency in the Z direction is fixed.

4. The method according to claim 1, wherein

   a swing range in the X direction is ±8 mm;

   a swing range in the Y direction is ±8 mm;
   an oscillation range in the Z direction is ±8 mm; and
   a positive direction of an X axis is a horizontal direction along a plane of a to-be-cut sheet, a positive direction of a Y axis is a vertical direction along the plane of the to-be-cut sheet, and a positive direction of a Z axis is a direction perpendicular to an XY plane and right above the plane of the to-be-cut sheet.

5. A dynamic control method for a laser spot, wherein the dynamic control method is to adjust an optical path of a laser beam in a laser cutting head, ensuring that a laser spot irradiated onto a kerf zone performs three-dimensional (3D) dynamic motion, and the method comprises:

   during commissioning or laser cutting of the laser cutting head, using an X-axis driving mechanism to ensure that the laser spot performs reciprocating motion in an X direction in a focal plane; and/or, using a Y-axis driving mechanism to ensure that the laser spot performs reciprocating motion in a Y direction in the focal plane; and
   using a Z-axis adjustment mechanism to ensure that the laser spot performs high-frequency oscillation in a Z direction to obtain kerf information at a specified mode;
   wherein, the X-axis driving mechanism, the Y-axis driving mechanism, and the Z-axis adjustment mechanism are electrically connected to a numerical control system of the laser cutting head.

6. The dynamic control method according to claim 5, wherein

   the Z-axis adjustment mechanism comprises a piezoelectric ceramic mechanism/a voice coil motor mechanism/a motor cam mechanism configured to drive a collimating mirror component to vibrate along an optical axis; and
   the numerical control system is configured to drive the collimating mirror component with the piezoelectric ceramic mechanism/the voice coil motor mechanism/the motor cam mechanism in response to a high-frequency oscillation instruction of a user in the Z direction to perform high-frequency oscillation along the optical axis.

7. The dynamic control method according to claim 6, wherein

   the X-axis driving mechanism comprises a galvanometer motor deflection mechanism configured to drive a reflector component to rotate around a rotating shaft along an X axis;

the Y-axis driving mechanism comprises a galvanometer motor deflection mechanism configured to drive a reflector component to rotate around a rotating shaft along a Y axis;

the rotating shaft of the reflector component driven by the X-axis driving mechanism and the rotating shaft of the reflector component driven by the Y-axis driving mechanism are disposed at an angle of 45° to 90°, and the reflector component corresponding to the X axis and the reflector component corresponding to the Y axis are independent of each other;

the numerical control system is configured to drive the reflector component of the X/Y axis with the galvanometer motor deflection mechanism in response to a high-frequency oscillation instruction of the user in the X/Y direction to perform high-frequency oscillation along the X/Y axis; and alternatively,

the X-axis driving mechanism and the Y-axis driving mechanism are configured to drive the reflector component of the X axis or the reflector component of the Y axis with a linkage module; and the reflector component corresponding to the X axis and the reflector component corresponding to the Y axis are independent of each other.

8. The dynamic control method according to claim 6, wherein a rotating shaft of a reflector component driven by the X-axis driving mechanism and a rotating shaft of a reflector component driven by the Y-axis driving mechanism are perpendicular to each other.

9. The dynamic control method according to claim 6, wherein

a 3D dynamic trajectory of the laser spot is as follows:

$$x=\tan(a)* L_1;$$

$$y=\tan(b)* L_2;$$

and

$$z=c*F,$$

wherein, x, y, and z represent 3D coordinates of each trajectory point in the 3D dynamic trajectory from a focal point 0; and
a is an angle swung by a rotating shaft of a motor along an X axis in an XY plane relative to an original position, b is an angle swung by a rotating shaft of a motor along a Y axis in a YZ plane relative to an original position, c is a displacement parameter of a lens of the control system, $F=$(a focal length of a focusing mirror/a focal length of a collimating mirror)$^2$, and $L_1$ and $L_2$ each are a constant.

10. The dynamic control method according to claim 9, wherein
an oscillation frequency in the Z direction is 50 Hz to 1 kHz, the swing angle a along the X axis is in a range of $\pm5°$, and the swing angle b along the Y axis is in a range of $\pm5°$.

11. A laser cutting system, comprising a laser cutting head and a numerical control system, wherein the numerical control system is configured to control, based on the dynamic control method for a laser spot according to any one of claims 1 to 10, a laser spot in the laser cutting head to move.

12. A computer program product, comprising a computer program, wherein when executed by a processor, the computer program implements steps of the dynamic control method for a laser spot according to any one of claims 1 to 10.

Static spot              3D dynamic spot

**FIG. 1**

**FIG. 2**

16

12

19

13

18

10

11

15

z

y

17

x

**FIG. 3**

**FIG. 4**

**FIG. 5**

**FIG. 6**

**FIG. 7**

**FIG. 8**

## INTERNATIONAL SEARCH REPORT

| International application No. |
|---|
| **PCT/CN2024/077565** |

**A. CLASSIFICATION OF SUBJECT MATTER**

B23K26/38(2014.01)i; B23K26/082(2014.01)i

According to International Patent Classification (IPC) or to both national classification and IPC

**B. FIELDS SEARCHED**

Minimum documentation searched (classification system followed by classification symbols)

IPC: B23K

Documentation searched other than minimum documentation to the extent that such documents are included in the fields searched

Electronic data base consulted during the international search (name of data base and, where practicable, search terms used)

CNKI, CNTXT, VEN: 激光, 光斑, 动态, 控制, 切割, 往复运动, 高频振荡, 模式, 属性, 位置, 摆动, laser, facula, spot, dynamic, control, cut, advance, return, movement, reciprocating, high, prequency, oscillation, pattern, property, location, swing.

**C. DOCUMENTS CONSIDERED TO BE RELEVANT**

| Category* | Citation of document, with indication, where appropriate, of the relevant passages | Relevant to claim No. |
|---|---|---|
| PX | CN 116021174 A (JINAN BODOR LASER CO., LTD.) 28 April 2023 (2023-04-28) description, paragraphs 21-71, and figures 1-8 | 1-12 |
| X | CN 113182672 A (GUANGDONG HONGSHI LASER TECHNOLOGY CO., LTD.) 30 July 2021 (2021-07-30) description, paragraphs 57-107, and figures 1-11 | 1-12 |
| A | CN 107442930 A (HUAZHONG UNIVERSITY OF SCIENCE AND TECHNOLOGY) 08 December 2017 (2017-12-08) entire document | 1-12 |
| A | CN 111590198 A (HUAZHONG UNIVERSITY OF SCIENCE AND TECHNOLOGY) 28 August 2020 (2020-08-28) entire document | 1-12 |
| A | CN 115609142 A (SUZHOU CHUANGXIN LASER TECHNOLOGY CO., LTD.) 17 January 2023 (2023-01-17) entire document | 1-12 |
| A | US 5571430 A (TOYOTA MOTOR CO., LTD.) 05 November 1996 (1996-11-05) entire document | 1-12 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **23 May 2024** | **03 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/077565** |

## C.    DOCUMENTS CONSIDERED TO BE RELEVANT

| Category* | Citation of document, with indication, where appropriate, of the relevant passages | Relevant to claim No. |
| --- | --- | --- |
| A | US 2009242521 A1 (ELECTRO SCIENTIFIC INDUSTRIES, INC.) 01 October 2009 (2009-10-01)<br>    entire document | 1-12 |

**INTERNATIONAL SEARCH REPORT**
Information on patent family members

International application No.

**PCT/CN2024/077565**

| Patent document cited in search report | | | Publication date (day/month/year) | Patent family member(s) | | | Publication date (day/month/year) |
|---|---|---|---|---|---|---|---|
| CN | 116021174 | A | 28 April 2023 | None | | | |
| CN | 113182672 | A | 30 July 2021 | None | | | |
| CN | 107442930 | A | 08 December 2017 | None | | | |
| CN | 111590198 | A | 28 August 2020 | None | | | |
| CN | 115609142 | A | 17 January 2023 | None | | | |
| US | 5571430 | A | 05 November 1996 | JPH | 07185866 | A | 25 July 1995 |
| | | | | JP | 3060813 | B2 | 10 July 2000 |
| | | | | KR | 950021919 | A | 26 July 1995 |
| | | | | KR | 0165906 | B1 | 15 January 1999 |
| | | | | EP | 0661127 | A1 | 05 July 1995 |
| US | 2009242521 | A1 | 01 October 2009 | US | 2012145686 | A1 | 14 June 2012 |
| | | | | US | 8723076 | B2 | 13 May 2014 |
| | | | | KR | 20100136471 | A | 28 December 2010 |
| | | | | KR | 101570834 | B1 | 20 November 2015 |
| | | | | TW | 200950917 | A | 16 December 2009 |
| | | | | TWI | 507264 | B | 11 November 2015 |
| | | | | US | 8124911 | B2 | 28 February 2012 |
| | | | | JP | 2011516267 | A | 26 May 2011 |
| | | | | JP | 5420635 | B2 | 19 February 2014 |
| | | | | WO | 2009145978 | A1 | 03 December 2009 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310151781